## Europäisches Patentamt

## European Patent Office

## Office européen des brevets

(19)

(11) Veröffentlichungsnummer: **0 1 1 3 027**
**B1**

(12)

# EUROPÄISCHE PATENTSCHRIFT

(45) Veröffentlichungstag der Patentschrift:
**12.03.86**

(21) Anmeldenummer: **83111743.7**

(22) Anmeldetag: **24.11.83**

(51) Int. Cl.⁴: **C 08 G  18/10,** C 08 G  18/83,
C 08 G  18/50, C 07 C  125/06,
C 07 C  85/20

(54) Verfahren zur Herstellung von Polyaminen.

(30) Priorität: **04.12.82  DE 3244912**

(43) Veröffentlichungstag der Anmeldung:
**11.07.84 Patentblatt 84/28**

(45) Bekanntmachung des Hinweises auf die Patenterteilung:
**12.03.86 Patentblatt 86/11**

(84) Benannte Vertragsstaaten:
**BE DE FR GB IT**

(56) Entgegenhaltungen:
**EP - A - 0 050 275
EP - A - 0 099 537
DE - A - 2 948 419
US - A - 2 888 439**

(73) Patentinhaber: **BAYER AG, Konzernverwaltung RP
Patentabteilung, D-5090 Leverkusen 1 Bayerwerk (DE)**

(72) Erfinder: **Rasshofer, Werner, Dr., Wolfskaul 10,
D-5000 Koeln 80 (DE)**
Erfinder: **Ballé, Gerhard, Dr., Nietzschestrasse 14,
D-5090 Leverkusen 1 (DE)**

ACTORUM AG

## Beschreibung

Die Erfindung betrifft ein einstufiges Verfahren zur Herstellung von bevorzugt Urethangruppen und gegebenenfalls auch andere Gruppen der Isocyanatchemie aufweisenden Polyaminen durch Hydrolyse von zwei oder mehreren aromatischen Isocyanatgruppen aufweisenden Verbindungen mit einem NCO-Gehalt von 0,5 bis 40 Gew.-% (modifizierten Polyisocyanaten oder NCO-Prepolymeren) mit überschüssigen Mengen an Wasser in Gegenwart von wasserlöslichen, aliphatischen, acyclischen oder cyclischen Ether- und/oder Thioetherverbindungen und gegebenenfalls weiteren, zumindest teilweise wasserlöslichen Lösungsmitteln in untergeordneten Mengen, jedoch ohne Mitverwendung von sauren oder basischen Katalysatoren bei der Hydrolyse.

Als zwei oder mehrere, aromatische Isocyanatgruppen aufweisende Verbindungen werden modifizierte Polyisocyanate, bevorzugt mit Urethangruppen modifizierte Isocyanate oder durch andere Gruppen der Isocyanatchemie, z.B. Amid-, Harnstoff-, Biuret-, Isocyanurat-, Uretdion- oder Carbodiimidgruppen modifizierte Polyisocyanate oder NCO-Prepolymere bzw. -Semiprepolymere verwendet. Das Verfahren ist besonders einfach und preiswert durchzuführen und ist umweltfreundlich, da dabei keine Salze anfallen, während bei den meisten vorbekannten Verfahren sich aus den sauren oder basischen Katalysatoren Salze bilden.

Erfindungsgegenstand sind auch die nach dem Verfahren zugänglichen Polyamine.

Die Polyamine eignen sich als Ausgangsstoffe zur Herstellung von Polyisocyanat-Polyadditionsprodukten wie homogenen oder geschäumten Polyharnstoffen oder Polyurethanharnstoffen, aber auch als Ausgangsstoffe in Polykondensationsverfahren für Polymere, z.B. zur Herstellung von Polyamiden, sowie als Härter in der Epoxidchemie.

Urethangruppen aufweisende Polyamine sind bekannt. Bisher beschrittene Wege zu ihrer Herstellung nach dem Stand der Technik werden ausführlich in den DE-A 29 48 419 und 30 39 600 unter Zitierung der Literatur nach dem bisherigen Stand der Technik zur Herstellung solcher Polyamine beschrieben. Gleichfalls ist bekannt, dass Isocyanate mit saurer oder basischer Katalyse in Amine umgewandelt werden können, wie es z.B. in N.V. Sidgwick, «The Organic Chemistry of Nitrogen», Clarendon Press, Oxford, S. 326 (1966) sowie in J. March, «Advanced Organic Chemistry: Reactions, Mechanisms and Structure», McGraw-Hill Book Co., New York, S. 658 (1968), belegt ist. Dabei gibt Sidgwick einen Hinweis auf die alkalische Hydrolysierbarkeit von NCO-Gruppen, der jedoch völlig unspezifisch und allgemein gehalten ist. J. March spricht allgemein davon, dass die Hydrolyse von Isocyanaten und Isothiocyanaten zu Aminen mit Säuren und Basen katalysiert werden kann. Dem Fachmann bekannt ist auch das intermediäre Auftreten von Isocyanaten, z.B. beim sog. Curtius- oder Lossen-Abbau von Säureaziden und Hydroxamsäuren und deren Zersetzung mit wässeriger Säure zu Aminsalzen. Ein solches präparatives Vorgehen ist z.B. in «Organic Syntheses», Coll. vol. IV, 819 (1963), am Beispiel der Herstellung von Putrescin-Hydrochlorid beschrieben.

Von E. Mohr, «J. prakt. Chem.», 71, 133 (1905) stammt die Beobachtung, dass Phenylisocyanat in der Kälte von verdünnter Natronlauge schneller angegriffen wird als von Wasser. Von C. Naegeli et al., «Helv. Chim. Acta», 21, 1100 (1938), wird berichtet, dass man aus mit Elektronenakzeptoren wie Nitrogruppen, Halogenatomen oder Acylgruppen substituierten Phenylisocyanaten durch Hydrolyse in feuchtem Ether oder 1% Wasser enthaltendem Aceton, also bei Abwesenheit von Säuren oder Basen, in wenigen Minuten bis zu 1 Stunde während Umsetzung die entsprechenden Monoamine erhält. Aus 2,4-Dinitrophenylisocyanat erhält man das Amin auch ohne Solvens in heissem Wasser in praktisch 100%iger Ausbeute und ohne Nebenreaktion der Harnstoffbildung.

Überraschenderweise wurde nun gefunden, dass auch dann aminische Produkte aus entsprechenden Vorstufen durch unkatalysierte Hydrolyse erhalten werden können, wenn zwei oder mehr Isocyanatgruppen aufweisende Verbindungen (modifizierte Polyisocyanate oder NCO-Prepolymere) als Ausgangsprodukte eingesetzt werden. Bei den mehrfunktionellen Isocyanaten war nämlich zu befürchten, dass jede entstandene $NH_2$-Gruppe, auch unter starker Verdünnung, mit einer frischen NCO-Gruppe unter Harnstoffpolymerbildung reagiert, insbesondere bei der Verwendung von NCO-Verbindungen ohne Substitution mit elektronenanziehender Gruppe im aromatischen Kern.

In der prioritätsälteren, nicht vorveröffentlichten EP-A 0099 537 wird ein Einstufenverfahren zur Herstellung von Polyaminen durch Hydrolyse von endständige NCO-Gruppen aufweisenden Verbindungen mit Wasser und wasserlöslichen Lösungsmitteln in Gegenwart von unlöslichen basischen Katalysatoren beschrieben. Ferner werden Polyamine nach dem genannten Verfahren beansprucht.

Überraschenderweise wurden jedoch Produkte mit einem beachtenswert hohen Amingehalt auch ohne Anwendung starker Verdünnung erhalten, wenn man aromatische Isocyanatgruppen enthaltende Verbindungen, welche bevorzugt auch Urethangruppen sowie gegebenenfalls andere Gruppen, wie sie in modifizierten Polyisocyanaten üblicherweise vorliegen, aufweisen, zur Hydrolyse verwendet. Die Gruppierungen, wie sie in modifizierten Polyisocyanaten üblicherweise vorliegen, sind z.B. Urethangruppen, Harnstoffgruppen, Amidgruppen, Biuretgruppen, Uretdiongruppen, Isocyanuratgruppen, Allophanatgruppen oder zusätzliche Gruppen, wie sie in NCO-Prepolymeren aus (gegebenenfalls modifizierten) Polyisocyanaten und den üblichen nieder- und/oder höhermolekularen Polyhydroxyl- (oder Polyamino-) verbindungen entstehen, z.B. Polyhydroxy-Polyestern, -Polyethern, -Polythioethern, -Polyacetalen oder -Polycarbonaten. Die modifizierten Polyisocyanate oder NCO-Prepolymeren besitzen mindestens zwei Isocyanatgruppen und einen NCO-Gehalt von 0,5 bis 40 Gew.-% und werden mit überschüssigen Mengen an Wasser unter Mitverwendung von wasserlöslichen Lösungsmitteln mit Ether- und/oder Thioetherbindungen und gegebenenfalls unterschüssigen Mengen weiterer, zumindest teilweise wasserlöslicher Lösungsmittel, in Abwesenheit von festen, flüssigen, gelösten, ungelösten, anorganischen oder organischen, basischen oder sauren Katalysatoren hydrolysiert.

Gegenstand der Erfindung ist somit ein Verfahren zur Herstellung von aromatische Aminogruppen und bevorzugt zusätzlich auch Urethangruppen und/oder gegebenenfalls weitere Gruppen der Isocyanatchemie aufweisenden Verbindungen durch Hydrolyse von mindestens zwei aromatisch gebundenen NCO-Gruppen sowie bevorzugt auch Urethangruppen und/oder gegebenenfalls weitere Gruppen der Isocyanatchemie aufweisenden, modifizierten Polyisocyanaten oder NCO-Prepolymeren mit einem NCO-Gehalt von 0,5 bis 40 Gew.-%, vorzugsweise 1,2 bis 25 Gew.-%, dadurch gekennzeichnet, dass die mehrwertigen, aromatischen NCO-Verbindungen mit

A) einer der Menge an NCO-Gruppen mindestens äquivalenten Menge Wasser, und

B) einem Lösungsmittel oder Lösungsmittelgemisch aus

a) 50 bis 100 Gew.-% aliphatische, cyclische und/oder acyclische Ether- und/oder Thioetherbindungen enthaltende Lösungsmittel sowie

b) unter 50 Gew.-%, vorzugsweise 10 bis 40 Gew.-% andere, zumindest teilweise wasserlösliche Lösungsmittel

bei −20 bis 185, bevorzugt 50 bis 165° C, vermischt werden und das Amin gegebenenfalls nach Abdestillieren der Lösungsmittel und des Wassers als Rückstand oder aber durch Phasentrennung, Filtration oder Extraktion mit wasserunlöslichen Lösungsmitteln aus dem Hydrolysenansatz isoliert wird.

Als modifizierte Polyisocyanate kommen Polyisocyanate in Betracht, welche mit unterschüssigen Mengen an Di- und/oder Polyolen, Wasser oder Aminoalkoholen modifiziert wurden oder unter Biuretisierung, Trimerisierung oder Allophanatisierung abgewandelt wurden. Im erfindungsgemässen Verfahren bevorzugt einsetzbare Verbindungen sind z.B. mit stöchiometrisch unterschüssigen Mengen mehrwertiger, niedermolekularer Polyole im NCO/OH-Verhältnis von 2:1 bis 4:1 modifizierte Diisocyanate, z.B. auf der Basis von Diphenylmethan-4,4'- und/oder -2,4'-diisocyanaten oder Toluylendiisocyanaten.

Besonders bevorzugt sind aber NCO-Prepolymere auf der Basis von höhermolekularen aromatischen Diisocyanaten und Verbindungen der Molmasse 400 bis etwa 12 000, vorzugsweise 500 bis 6500, welche mindestens 2, vorzugsweise 2 bis 4, Hydroxyl-, Amino- oder Merkaptogruppen, besonders bevorzugt aber Hydroxylgruppen, enthalten. Es sind dies insbesondere höhermolekulare Polyether, Polythioether und Polyacetate, aber auch Polyester, Polylactone oder Polycarbonate oder ihre Mischungen bzw. Mischtypen, z.B. Polyetherester. In modifizierenden Mengen können auch sogenannte Kettenverlängerungsmittel wie niedermolekulare Di- oder Polyole und andere, als Kettenverlängerungsmittel bekannte Verbindungen mit Molgewichten zwischen 62 und 399, vorzugsweise 62 bis 250, bei der NCO-Prepolymerbildung mitverwendet werden, z.B. 1,4-, 1,3- und/oder 2,3-Butandiol, Diethylenglykol, Neopentylglykol oder 1,2-Propylenglykol.

Als aromatische Polyisocyanate kommen die bekannten Verbindungen, z.B. die Toluylen-2,4-und/oder -2,6-diisocyanate, Diphenylmethan-2,4'-, -4,4'- und/oder -2,2'-diisocyanate und ihre Mono- bis Tetra-$C_1$-$C_4$-alkylderivate in Frage.

Sowohl die höhermolekularen Polyhydroxylverbindungen, bevorzugt Polyether, wie auch die Polyisocyanate sind z.B. in den DE-A 29 48 449 und 30 39 600 und in den dort zitierten Veröffentlichungen aufgeführt. Die NCO-Prepolymeren werden in an sich bekannter Weise durch Umsetzung der Reaktionspartner in der Schmelze oder in Lösung hergestellt. Das Äquivalentverhältnis von NCO-Gruppen zu aktive Wasserstoffatome aufweisenden Gruppen (bevorzugt OH-Gruppen) ist in jedem Fall ≥ 1, in der Regel 1,5:1 bis 2,8:1; insbesondere 1,5:1 bis 2:1. Selbstverständlich ist es auch möglich, einen noch grösseren Überschuss an Polyisocyanaten zu verwenden.

Die NCO-Prepolymere (NCO-Voraddukte) haben je nach den gewählten Ausgangskomponenten im allgemeinen ölige bis wachsartige Konsistenz. Beträgt das NCO/OH-Verhältnis mehr als 2, so erhält man im wesentlichen nicht verlängerte NCO-Voraddukte neben freiem Diisocyanat (Semiprepolymere), während NCO/OH-Verhältnisse von unter 2:1 eine Erhöhung des mittleren Molekulargewichts der NCO-Voraddukte zur Folge haben. Werden die erhaltenen NCO-Prepolymere noch einer Destillation, vorteilhaft unter Verwendung eines Dünnschichtverdampfers, unterworfen, so werden im erfindungsgemässen Verfahren Produkte mit einem sehr geringen, bzw. praktisch ohne Gehalt an monomerem Diamin, erhalten.

Der NCO-Gehalt der eingesetzten NCO-Prepolymere beträgt mehr als 0,5, bevorzugt mehr als 1,2, besonders bevorzugt mehr als 1,5 Gew.-%, während die Obergrenze bei etwa 30, bevorzugt 25, besonders bevorzugt bei 15 Gew.-%, liegt. Im erfindungsgemässen Verfahren können jedoch auch sogenannte Semiprepolymere, d.h. Mischungen von NCO-Prepolymeren mit weiteren freien Polyisocyanaten eingesetzt werden, die einen u.U. noch höheren Gehalt, z.B. bis 40 Gew.-% NCO, aufweisen können. Die aromatischen NCO-Gruppen sind vorzugsweise an einem Phenylen- oder eine Diphenylmethanstruktur, die gegebenenfalls mit einem oder mehreren $C_1$ bis $C_4$-Alkylsubstituenten versehen sein können, gebunden.

Die Wassermenge beträgt mindestens 1 Mol Wasser pro Mol NCO-Gruppe bei der Hydrolyse von NCO-Verbindungen. Bevorzugt wird die mehr als 5fache, besonders bevorzugt mehr als 10fache stöchiometrische Wassermenge verwendet. Zumeist liegt der Anteil Wasser sogar noch höher, z.B. oberhalb von 10 Teilen Wasser pro 100 Teilen NCO-Verbindung.

Geeignete Lösungsmittel Ba) sind aliphatische, acyclische oder cyclische Ether- und/oder Thioetherverbindungen, die ausser den Ether- und/oder Thioetherbindungen nur C-C-Einfach- oder Mehrfachbindungen oder C-H-Bindungen und sonst keine anderen Bindungen aufweisen, beispielsweise Dimethoxyethan, Diethoxyethan, Diethylenglykoldimethylether, Diethylenglykoldiethylether, Diethylenglykolmonomethylmono-t-butylether, Triethylenglykoldimethylether, Ethylenglykolmethyl-t-butylether, Dipropylenglykoldimethylether, Tetrahydrofuran, 2,5-Dimethyltetrahydrofuran, 1,4-Dioxan, 1,4-Dithian, ferner cyclische Ethylen- oder Propylenoxidoligomere wie 1,4,7,10-Tetraoxacyclododecan, 1,4,7,10,13-Pentaoxacyclopentadecan, 1,4,7,10,13,16-Hexaoxacyclooctadecan etc. Weniger geeignet sind Etherverbindungen mit aromatischen oder/und aliphatisch-aromatischen Etherbindungen wie z.B. Dibenzo-(18)-krone-6 oder Bis-(2-methoxyphenyl)-1,3,5,8,11-pentaoxaundecan, insbesondere aus Preisgründen und wegen ihres z.T. zu hohen Schmelzpunktes, so dass auch ihrer gegebenenfalls nur anteiligen Mitverwendung Grenzen gesetzt sind.

Neben den wasserlöslichen Etherlösungsmitteln Ba) können weniger als 50 Gew.-% der Lösungsmittel andere, gegebenenfalls nur teilweise wasserlösliche Lösungsmittel Bb) mitverwendet werden, z.B. solche mit polaren Gruppen wie Keto-, Nitril-, Carbonsäure-N,N-dialkylamid- und Harnstoffgruppen. Solche geeigneten Lösungsmittelklassen sind insbesondere

1. wasserlösliche, aliphatische oder cycloaliphatische Säureamide mit 1 bis 10 Kohlenstoffatomen, z.B. Dimethylformamid, Diethylformamid, N-Methylpyrrolidon, Dimethylacetamid, Caprolactam, Formamid.

Bevorzugt sind Dimethylformamid, Dimethylacetamid und N-Methylpyrrolidon;

2. wasserlösliche, tetraalkylierte aliphatische Harnstoffe mit 4 bis 12 C-Atomen, z.B. Tetramethylharnstoff oder Tetraethylharnstoff;

3. wasserlösliche, aliphatische oder cycloaliphatische Sulfone oder Sulfoxide mit 2 bis 10 Kohlenstoffatomen, z.B. Tetramethylensulfon oder Dimethylsulfoxid;

4. wasserlösliche, aliphatische oder cycloaliphatische Phosphorsäureamide, z.B. Hexamethylphosphorsäuretriamid;

5. Acetonitril, Propionitril;

6. wasserlösliche Ketone wie Aceton oder teilwasserlösliche Ketone wie Methylethylketon (MEK).

Diese Lösungsmittel Bb) der Klassen 1 bis 6 können auch in beliebigen Mischungsverhältnissen zueinander eingesetzt werden. Unter den genannten Lösungsmitteln werden solche bevorzugt, welche bei Normaldruck unter 250, vorzugsweise bei 64 bis 165° C, sieden, da sich hierbei die Aufarbeitung vereinfacht.

Bevorzugte wassermischbare Lösungsmittel sind Dimethylformamid, N-Methylpyrrolidon, Tetramethylensulfon, Acetonitril, Aceton und Methylethylketon. Technisch ganz besonders geeignet und zugänglich sind Dimethylformamid, Acetonitril und Aceton, weniger bevorzugt sind die zerewitinoffaktiven Substanzen, wie z.B. Caprolactam oder Formamid. Insbesondere bei kontinuierlicher Arbeitsweise möglich, aber insgesamt weniger bevorzugt ist die gegebenenfalls nur anteilige Verbindung von einwertigen Alkanolen oder einwertigen Phenolen als Lösungsmittel, z.B. Propanol, t-Butanol, Glykolmonoethylether oder Phenol.

Eine Mitverwendung von nicht vollständig oder nur geringfügig mit Wasser mischbaren Lösungsmitteln, z.B. Dichlormethan, Chloroform, Ethylacetat oder aliphatischen oder aromatischen Kohlenwasserstoffen wie n-Hexan oder Toluol ist in untergeordneten Mengen zur Erleichterung der Phasentrennung bei Raumtemperatur zweiphasiger Reaktionsgemische möglich.

Für die Menge an einzusetzendem Lösungsmittel gelten vorzugsweise folgende Randbedingungen des Verfahrens:

1. Pro 100 Teile NCO-Verbindung sollen in der Hydrolysereaktionsmischung $\geq$ 10, bevorzugt $\geq$ 20 und besonders bevorzugt $\geq$ 40 Teile Solvens verwendet werden.

2. Es muss so viel Wasser und Lösungsmittel verwendet werden, dass eine im wesentlichen homogene (höchstens schwach trübe) oder vorzugsweise eine homogene, klare Lösung mit der NCO-Verbindung und Wasser bei den Reaktionstemperaturen gebildet wird. Zur Hydrolyse der NCO-Verbindung zu Polyaminen mit hinreichend hoher Aminzahl (hoher Konversionsrate) ist es günstig, eine Konzentration der NCO-Verbindung $\leq$ 80 bzw. $\leq$ 65 Gew.-% in der Reaktionsmischung aufrechtzuerhalten. Je grösser die Verdünnung bei der Reaktion gewählt wird, um so besser wird im allgemeinen der Hydrolyseumsatz, d.h. es werden um so höhere Aminzahlen des Polyamins, d.h. eine um so höhere Konversion der NCO- in die $NH_2$-Gruppen, erhalten. Eine Grenze der Verdünnung ergibt sich praktisch aus der Wirtschaftlichkeit bei der Aufarbeitung; sie liegt in der Praxis etwa bei 5%iger Lösung. Es ist aber keineswegs so, dass die Konversionsraten sich direkt analog zum Verdünnungsgrad verhalten.

Es ist zweckmässig, bei der NCO-Hydrolysereaktion mindestens so viel Lösungsmittel mitzuverwenden, dass eine weitgehend homogene, vorzugsweise homogene, Reaktionsmischung verbleibt.

Als Nebenreaktion im erfindungsgemässen Verfahren tritt Vorverlängerung auf, d.h. Isocyanat und bereits gebildetes Amin reagieren unter Kettenverknüpfung zu Harnstoffen. Diese Nebenreaktion lässt sich durch Arbeiten in verdünnter Lösung und (überraschenderweise) der Einhaltung relativ hoher Reaktionstemperaturen, z.B. 80 bis 100° C, weitgehend zurückdrängen. Zwar ist ein möglichst geringes Ausmass dieser Nebenreaktionen erwünscht, aus ökonomischen Gründen kann aber auch ein gewisser Grad an Vorverlängerung in Kauf genommen werden.

Die erfindungsgemässe Reaktion wird bevorzugt in homogener Phase durchgeführt. Durch ein geringfügiges Überdosieren der Wassermenge oder der Menge der NCO-Verbindung kann gegebenenfalls eine leichte Trübung der Reaktionsmischung eintreten, da die Ausgangsstoffe nicht mehr vollständig gelöst sind. Eine Durchführung im stark heterogenen Bereich, z.B. durch übermässige Wasserzugabe unter Ausfällung des NCO-Prepolymers, ergibt jedoch äusserst unzureichende Produkte. Durch einige wenige Vorversuche lassen sich jedoch die von den Ausgangsverbindungen abhängigen optimalen Mischungsverhältnisse leicht bestimmen.

Die Reaktion kann bei Temperaturen unter 185, z.B. 50 bis 165°C, durchgeführt werden. Bevorzugt wird jedoch bei Temperaturen von 80 bis 100°C gearbeitet, da hierbei die besten Raum/-Zeit-Ausbeuten bei gleichzeitig hoher Löslichkeit und überraschenderweise nur relativ geringe Harnstoffverlängerung erreicht werden. Besonders bevorzugt wird am Siedepunkt des Gemisches gearbeitet, der wegen der Anwesenheit von Wasser zumeist bei ca. 90 bis 100°C liegt. Unter besonderen Umständen kann es auch notwendig werden, die Reaktion unter Druck durchzuführen, um ausreichend hohe Temperaturen zu erhalten.

Das Einsetzen der Reaktion ist durch die fast spontane Abspaltung von $CO_2$ zu erkennen, die auch bereits bei niedrigen Temperaturen, z.B. 20°C, beobachtbar ist. Es ist jedoch erheblich günstiger, erfindungsgemäss bei den angegebenen höheren Temperaturen zu arbeiten, um die Harnstoffbildung zurückzudrängen. Wichtig ist, dass für eine sehr gute und schnelle Durchmischung unter homogener Lösung der Reaktanden gesorgt wird, was im wesentlichen durch die Verwendung der Lösungsmittel sichergestellt werden muss. In gleicher Richtung wirkt auch die Viskositätsverminderung bei Anwendung der höheren Reaktionstemperaturbereiche. Die Reaktion kann diskontinuierlich oder kontinuierlich durchgeführt werden.

In einer diskontinuierlichen Ausführungsform wird z.B. die NCO-Gruppen aufweisende Verbindung in die Wasser und Lösungsmittel enthaltende Mischung eingebracht. Dies kann mittels eines Tropftrichters oder z.B. durch maschinelle Einspritzung mittels einer Düse geschehen, wobei durch intensives Rühren eine möglichst gute Verteilung angestrebt wird.

Es ist aber auch möglich, die NCO-Gruppen aufweisende Verbindung, bevorzugt bei 20 bis 80°C, vorzulegen und das Solvens/Wasser-Gemisch zuzusetzen und die Reaktion bei z.B. 50 bis 150°C vorzunehmen oder nach Beendigung der bei tiefer (z.B. −10 bis +15°C) Temperatur erfolgten Zugabe gegebenenfalls langsam auf höhere Temperaturen zu erwärmen.

In einer kontinuierlichen Ausführungsform, die für eine grosstechnische Produktion besonders geeignet ist, werden die NCO-Verbindungen (gegebenenfalls als Lösung) und die wässerige Lösung getrennt einem gemeinsamen Reaktionsraum zudosiert, z.B. mittels eines Durchflussmischers intensiv vermischt, so zur Reaktion gebracht und aus dem Mischraum schnell ausgetragen. Die Dosierung kann z.B. über graduierte Tropftrichter oder mittels einer Kolben- und/oder Membrandosierpumpe oder einer anderen maschinellen Dosiervorrichtung vorgenommen werden. Es ist bei der kontinuierlichen Dosierung bevorzugt, beide Komponenten in sehr kurzer Zeit (Sekunden oder Bruchteilen davon) mit einer geeigneten, gegebenenfalls maschinell betriebenen Vorrichtung zu vermischen, zur Reaktion zu bringen und aus dem Reaktionsraum auszutragen.

Zur Erleichterung der Reaktion der Isocyanatgruppen mit der wässerigen Lösungsmittelphase können verschiedene Zusätze verwendet werden. So können zum Homogenisieren ein oder mehrere handelsübliche Emulgatoren, z.B. in Mengen von 0,01 bis 1 Gew.-Teil auf 100 Teile Reaktionsmischung, zugesetzt werden. Bei Verwendung homogener Reaktionsmischungen (gelöste NCO-Verbindung) ist ein Emulgatorzusatz jedoch nicht notwendig.

Nach dem Mischungsvorgang kann direkt zum Polyamin aufgearbeitet werden, gegebenenfalls kann auch eine kurze Nachreaktionszeit von meistens weniger als 5 Minuten angeschlossen werden. Hierbei wird das Reaktionsgemisch bevorzugt unter Normaldruck am leichten Rückfluss erhitzt, um das entstandene Kohlendioxid möglichst vollständig abzutrennen. Die Reaktionsmischung kann ohne Nachteile aber auch längere Zeit auf Temperatur gehalten werden. Besonders bevorzugt wird nach erfolgter Vermischung jedoch sofort aufgearbeitet.

Auch die Aufarbeitung kann kontinuierlich oder diskontinuierlich erfolgen. Die Aufarbeitung des Reaktionsgemisches geschieht gewöhnlich destillativ, extraktiv oder über eine Phasentrennung oder mit einer Kombination dieser Methoden.

Es werden, gegebenenfalls unter reduziertem Druck, die flüchtigen Bestandteile abdestilliert. Im allgemeinen werden Sumpftemperaturen (im verbleibenden Polyamin) von 100 bis etwa 130°C gegen Ende der Eindampfung eingehalten. Das zurückbleibende Polyamin kann direkt, z.B. als Ausgangsmaterial zur Herstellung von Poly(urethan)harnstoffen, weiter eingesetzt werden.

Extraktionsverfahren, gegebenenfalls nach Verdünnung mit Wasser, können mit wasserunlöslichen Lösungsmitteln wie Methylenchlorid oder Chlorbenzol durchgeführt werden, sind jedoch nicht bevorzugt.

Eine Phasentrennung des Reaktionsgemisches durch Abkühlung tritt in machen Fällen ein, wenn die Hydrolyse bei relativ hohen Temperaturen und in Gegenwart von relativ viel Wasser an der Grenze der Löslichkeit vorgenommen wurde. Die Phasentrennung kann durch Zusatz von Wasser oder bevorzugt durch Zusatz von Wasser nicht oder nur zum Teil lösenden Solventien wie z.B. Methylethylketon oder Ethylacetat verbessert oder auch erst erreicht werden. Man trennt die wässerige, gegebenenfalls Lösungsmittel enthaltende Phase von der Polyaminphase ab.

Die wässerige Phase kann dann meistens direkt wiederverwendet werden.

Die Polyaminphase enthält neben dem Polyamin etwas Wasser sowie Lösungsmittel, welche destillativ, gegebenenfalls unter Anlegen von Vakuum oder über eine Dünnschichtdestillation, möglichst vollständig entfernt werden.

Die nach der Aufarbeitung erfindungsgemäss erhaltenen Polyamine stellen im allgemeinen farblose bis schwach gefärbte, mittelviskose bis hochviskose und gegebenenfalls höherschmelzende Produkte mit den bereits angegebenen Aminogruppengehalten dar. Diese Polyamine weisen entsprechend ihren Ausgangsstoffen ferner gegebenenfalls Urethan- und/oder Harnstoff- und/oder Amid- und/oder Uretdion- und/oder Isocyanurat- und/oder Allophanat- und/oder Biuretgruppen sowie gegebenenfalls Ether- und/oder Acetal- und/oder Carbonat- und/oder Ester- und/oder Thioether- und/oder Dialkylsiloxangruppen und/oder die Reste von Polybutadienen auf, wie sie gegebenenfalls bereits in den NCO-Verbindungen vorgelegen haben. Durch Nebenreaktionen können jedoch auch zusätzliche Bindungen entstehen, z.B. Harnstoffgruppen aus bereits zu $NH_2$-Gruppen verseiften Anteilen und noch verbliebenen NCO-Gruppen während der Hydrolysereaktion.

Die Menge der in den Polyaminen enthaltenen primären aromatischen Aminogruppen entspricht maximal der Menge der NCO-Gruppen in den NCO-Verbindungen, also etwa 0,10 bis 20,3 Gew.-% $NH_2$, bevorzugt 0,15 bis 10 Gew.-% $NH_2$ und besonders bevorzugt 0,20 bis 2,0 Gew.-% $NH_2$.

An aliphatische Reste gebundene NCO-Gruppen liefern hochreaktive aliphatische Amine als Hydrolysenprodukte, welche mit noch vorhandenen NCO-Gruppen sehr schnell zu Harnstoffverbindungen abreagieren können und somit zumeist relativ höhermolekulare Polyharnstoffamine mit einem in vielen Fällen niedrigen $NH_2$-Gehalt ergeben, was in den meisten Fällen unerwünscht ist.

Die erfindungsgemäss erhaltenen aromatischen Polyamine werden wegen ihres niedrigen Dampfdruckes vorzugsweise als Reaktionspartner für gegebenenfalls blockierte Polyisocyanate bei der Herstellung von Polyurethanen (Polyurethanharnstoffen), gegebenenfalls zelligen Polyurethankunststoffen oder Polyurethanschaumstoffen eingesetzt, wobei sie gegebenenfalls auch mit anderen niedermolekularen (Molekulargewicht 32 bis 399) und/oder höhermolekularen (Molekulargewicht 400 bis ca. 12000) Verbindungen mit gegenüber Isocyanaten reaktiven Gruppen kombiniert werden können. Geeignete Ausgangskomponenten für die Herstellung von Polyurethankunststoffen werden oben im Zusammenhang mit der Prepolymerherstellung bzw. auch in DE-A 2 302 564, 2 432 764 (US-PS 3 903 679) sowie in den DE-A 2 639 083, 2 512 385, 2 513 815, 2 550 796, 2 550 797, 2 550 833, 2 550 860, 2 550 862 und 3 039 600 genannt. Dort finden sich auch Hinweise auf bei der Polyurethanherstellung gegebenenfalls mitzuverwendende Hilfs- und Zusatzstoffe.

Die Herstellung von Polyurethan(harnstoff)en mittels der erfindungsgemäss hergestellten Polyamine ist ebenfalls Gegenstand der vorliegenden Erfindung. Ihre Anwendung kann z.B. für homogene oder geschäumte Elastomere, Beschichtungen, Fäden oder Formkörper in der Applikation aus Schmelzen, Lösungen, Dispersionen oder als Reaktivkomponentenmischung nach den an sich bekannten Verfahren der Polyisocyanat-Polyadditionsreaktion erfolgen. Weitere Verwendungszwecke der erfindungsgemäss hergestellten Polyamine sind z.B. Kupplungskomponenten für Diazofarbstoffe, Härter für Epoxid- und Phenolharze sowie alle anderen an sich bekannten Reaktionen von Aminen wie Amid- oder Imidbildung und andere.

Die folgenden Beispiele dienen der Erläuterung des erfindungsgemässen Verfahrens. Wenn nicht anders vermerkt, sind Mengenangaben als Gewichtsteile bzw. Gewichtsprozente zu verstehen.

*Beispiele*

In den folgenden Beispielen werden als NCO-Gruppen aufweisende Verbindungen eingesetzt:

*Prepolymer A*

Toluylen-2,4-diisocyanat und lineares Polypropylenglykol der OH-Zahl 56 werden bei 20° C im NCO/OH-Verhältnis von 2:1 vereinigt und dann 4 Stunden auf 80° C erhitzt. NCO-Gehalt = 3,7%.

*Prepolymer B*

Toluylen-2,4-diisocyanat und lineares Polypropylenglykol der OH-Zahl 112 werden bei 20° C im NCO/OH-Verhältnis von 2:1 vereinigt und dann 4 Stunden auf 80° C erhitzt. NCO-Gehalt = 7,2%.

*Prepolymer C*

Toluylen-2,4-diisocyanat und ein linearer, auf Propandiol-1,2 gestarteter Polyether (aus 80 Gew.-% eines Polypropylenoxidblocks und 20 Gew.-% eines endständigen Polyethylenoxidblocks) der OH-Zahl 28 werden bei 20° C im NCO/OH-Verhältnis von 2:1 vereinigt und dann 3 Stunden auf 70° C und dann nochmals 2 Stunden auf 80° C erhitzt. NCO-Gehalt = 1,9%.

*Prepolymer D*

Ein Gemisch aus 60 Gew.-% 4,4'-Diisocyanatodiphenylmethan und 40% des 2,4'-Isomeren werden mit einem linearen Polypropylenglykol der OH-Zahl 56 vereinigt und dann 4 Stunden auf 80° C erhitzt. NCO-Gehalt = 3,5%.

*Prepolymer E*

Ein Gemisch aus 80 Gew.-% 2,4-Diisocyanatotoluol und 20 Gew.-% 2,6-Diisocyanatotoluol werden bei 20° C mit einem auf Trimethylolpropan gestarteten Polyethertriol, das Polypropylenoxidblöcke und 22 Gew.-% endständig angeordnete Ethylenoxidblöcke und die OH-Zahl 28 aufweist, im NCO/OH-Verhältnis von 5:1 vereinigt und dann 4 Stunden auf 80° C erhitzt. Das überschüs-

sige Toluylendiisocyanat wird dann mit Hilfe eines Dünnschichtverdampfers im Vakuum abdestilliert. NCO-Gehalt = 3,6%.

*Prepolymer F*

Toluylen-2,4-düsocyanat und ein auf Trimethylolpropan gestarteter Polyether der OH-Zahl 35 mit 80 Gew.-% Propylenoxid- und 20 Gew.-% endständig angeordneter Ethylenoxid-Einheiten werden bei 20° C im NCO/OH-Verhältnis 2:1 vereinigt und dann 3 Stunden auf 70° C und dann weitere 2 Stunden auf 80° C erhitzt. NCO-Wert = 2,4%.

*Prepolymer G*

Toluylen-2,4-diisocyanat und ein Polytetramethylenglykoletherdiol der OH-Zahl 112 werden bei 30° C im NCO/OH-Verhältnis 2:1 vereinigt und dann 4 Stunden auf 80° C erhitzt. NCO-Wert = 6,9%.

*Beispiele 1-18*

*Allgemeine Versuchsdurchführung:*

Vorgelegt wird das Gemisch aus Wasser und Lösungsmittel in dem in Tabelle 1 angegebenen Verhältnis. Unter Rühren wird es auf die in Tabelle 1 angegebene Temperatur erhitzt. Dazu wird innerhalb der in Tabelle 1 angegebenen Zeit die angegebene Menge an Isocyanatverbindung zugetropft, gegebenenfalls im Gemisch mit einem in Tabelle 1 ebenfalls angegebenen Lösungsmittel. Dabei werden verschiedene Mengen an $CO_2$ frei. Zutropfzeit und Nachrührdauer, während deren ständig gerührt wird, werden gleichfalls dort aufgeführt. Das Lösungsmittel wird bei 20 mbar/ 100° C und dann 0,1 mbar/100° C abdestilliert. Die Produkte sind sämtlich gelbe bis dunkelbraunrote, sehr hoch- bis mittelviskose Produkte. Die Analysendaten sind gleichfalls in Tabelle 1 verzeichnet.

*Beispiele 19-25*

*Allgemeine Versuchsdurchführung:*

In diesen Beispielen werden Lösungsmittelmengen und Wassermengen variiert, um ein ökonomisch günstigeres NCO-Verbindung/Lösungsmittel-Verhältnis zu erhalten. Daten in Tabelle 2. Es wird wie bei den Beispielen 1-18 verfahren.

*Beispiele 26-32*

*Allgemeine Versuchsdurchführung:*

In diesen Beispielen werden unter Verwendung des jeweils gleichen Lösungsmittels die verwendeten Prepolymere variiert. Sonst wird wie in den Beispielen 1-18 verfahren. Daten in Tabelle 3.

*Beispiele 33-40*

*Allgemeine Versuchsdurchführung:*

In diesen Beispielen werden die NCO-Verbindungen bei der in Tabelle 4 angegebenen Temperatur vorgelegt. Unter Rühren und $CO_2$-Entwicklung werden die Lösungsmittel/Wasser-Gemische, die auf die in Tabelle 4 angegebenen Temperaturen temperiert sind, zugegeben. Zugabezeit und Nachrührdauer sind gleichfalls verzeichnet. Das Lösungsmittel und Wasser werden bei 20 mbar/100° C und dann 0,10 mbar/100° C abdestilliert.

Die Daten der hochviskosen Aminverbindungen sind ebenfalls in Tabelle 4 aufgelistet.

*Beispiele 41-50*

*Allgemeine Versuchsdurchführung:*

In diesen Beispielen werden weitere, aus der Tabelle 5 entnehmbare, Lösungsmittelvariationen vorgenommen. Im übrigen wird wie bei den Beispielen 1-18 verfahren. Versuchsdaten und Analysendaten sind ebenfalls Tabelle 5 zu entnehmen.

*Beispiele 51-55*

*Allgemeine Versuchsdurchführung:*

Jeweils 90° C heisse Komponenten (Komponente A: NCO-Prepolymer gemäss Tabelle 6, Komponente B: Wasser/Solvens-Gemisch) werden in den angegebenen Zeiten durch Eindosierung über mit Dampf beheizte graduierte Tropftrichter in einen Reaktionsraum eindosiert. Dabei entweicht $CO_2$. Ohne Nachrührzeit wird das Reaktionsgemisch durch Destillation aufgearbeitet. Daten in Tabelle 6.

*Tabelle 1*

| Beispiel Nr. | 1 | 2 | 3 | 4 | 5 | 6 | 7 | 8 | 9 |
|---|---|---|---|---|---|---|---|---|---|
| Tle Prepolymer A | 100 | 100 | 100 | 100 | 100 | 100 | 100 | 100 | 100 |
| Wasser (Tle) | 50 | 200 | 50 | 50 | 50 | 50 | 50 | 100 | 40 |
| Dioxan (Tle) | 300 | 300 | — | — | — | — | — | — | — |
| THF (Tle) | — | — | — | — | — | — | — | — | — |
| 2,5-Dimethyl-THF (Tle) | — | — | — | — | — | — | — | — | — |
| Diglyme (Tle) | — | — | 300 | 200 | 200 | 150 | 150 | — | — |
| DME (Tle) | — | — | — | — | — | 150 | — | — | — |
| Triglyme (Tle) | — | — | — | — | — | — | 150 | 300 | — |
| DEG-methyl-t-butylether (Tle) | — | — | — | — | — | — | — | — | 400 |
| EG-methyl-t-butylether (Tle) | — | — | — | — | — | — | — | — | — |
| DEG-diethylether (Tle) | — | — | — | — | — | — | — | — | — |
| Cosolvens (Tle) | — | — | — | 100 DMF | 100 Aceton | — | — | — | — |
| Solvens-T. (° C) | 65 | 65 | 95 | 95 | 95 | 80 | 85 | 95 | 95 |

| Diglyme = Diethylenglykoldimethylether | THF = Tetrahydrofuran |
|---|---|
| Triglyme = Triethylenglykoldimethylether | DME = Dimethoxyethan |
| | DEG = Diethylenglykol |
| | EG = Ethylenglykol |

*Tabelle 1* (Fortsetzung)

| Beispiel Nr. | 1 | 2 | 3 | 4 | 5 | 6 | 7 | 8 | 9 |
|---|---|---|---|---|---|---|---|---|---|
| Prep.-T. (°C) | 20 | 20 | 60 | 45 | 30 | 35 | 35 | 40 | 20 |
| Zugabe-Dauer (min) | 45 | 45 | 45 | 45 | 30 | 35 | 35 | 45 | 45 |
| Nachrührdauer (min) | 5 | 5 | 10 | 10 | 10 | — | — | 5 | 5 |
| Prim. N (%)[1] | 0,45 | 0,41 | 0,54 | 0,52 | 0,56 | 0,50 | 0,62 | 0,68 | 0,49 |
| NH-Zahl (mg KOH/g)[2] | 19,3 | 16,4 | 21,4 | 20,7 | 22,4 | 20,0 | 24,9 | 27,1 | 19,4 |
| Gesamt-N (%)[3] | 2,46 | 2,50 | 2,54 | 2,48 | 2,61 | 2,56 | 2,60 | 2,62 | 2,50 |

[1] HClO-Titration
[2] Aus [1] berechnet
[3] Nach Kjedahl

*Tabelle 1* (Fortsetzung)

| Beispiel Nr. | 10 | 11 | 12 | 13 | 14 | 15 | 16 | 17 | 18 |
|---|---|---|---|---|---|---|---|---|---|
| Tle Prepolymer A | 100 | 100 | 100 | 100 | 100 | 100 | 100 | 100 | 100 |
| Wasser (Tle) | 50 | 50 | 40 | 40 | 40 | 40 | 40 | 50 | 50 |
| Dioxan (Tle) | — | — | — | — | — | — | — | 100 | — |
| THF (Tle) | — | — | — | — | — | — | — | 100 | 250 |
| 2,5-Dimethyl-THF (Tle) | — | — | — | — | — | — | — | — | 50 |
| Diglyme (Tle) | — | — | — | — | 280/120[1] | 240 | 240 | — | — |
| DME (Tle) | — | — | — | — | — | 80[1] | — | — | — |
| Triglyme (Tle) | — | — | — | — | — | — | — | — | — |
| DEG-methyl-t-butylether (Tle) | — | — | — | 200 | — | — | — | — | — |
| EG-methyl-t-butylether (Tle) | 400 | — | — | — | — | — | — | — | — |
| DEG-diethylether (Tle) | — | 320/80[1] | 320 | — | — | — | — | — | — |
| Solvens (Tle) | — | — | 100 DMF[1] | 100 DMF[1] | — | — | 100[1] CH₃CN | — | — |

*Tabelle 1* (Fortsetzung)

| Beispiel Nr. | 10 | 11 | 12 | 13 | 14 | 15 | 16 | 17 | 18 |
|---|---|---|---|---|---|---|---|---|---|
| Solvens-T. (°C) | 95 | 95 | 80 | 80 | 45 | 70 | 75 | 60 | 90 |
| Prep.-T. (°C) | 60 | 60 | 20 | 45 | 20 | 20 | 20 | 20 | 20 |
| Zugabe-Dauer (min) | 5 | 5 | 30 | 30 | 40 | 60 | 90 | 20 | 20 |
| Nachrührdauer (min) | — | — | 5 | — | — | 10 | 5 | 5 | — |
| Prim. N (%)[2] | 0,43 | 0,57 | 0,67 | 0,60 | 0,50 | 0,51 | 0,60 | 0,32 | 0,33 |
| NH-Zahl (mg KOH/g)[3] | 17,0 | 22,7 | 26,8 | 24,1 | 20,1 | 20,2 | 24,1 | 12,7 | 13,1 |
| Gesamt-N (%)[4] | 2,47 | 2,54 | 2,44 | 2,39 | 2,59 | 2,60 | 2,57 | 2,59 | 2,51 |

[1] Zur Lösung des NCO-Prepolymers
[2] HClO₄-Titration
[3] Aus [2] berechnet
[4] Nach Kjeldahl

Tabelle 2

| Beispiel Nr. | 19 | 20 | 21 | 22 | 23 | 24 | 25 |
|---|---|---|---|---|---|---|---|
| Tle Prepolymer A | 100 | 100 | 100 | 100 | 100 | 100 | 100 |
| Wasser (Tle) | 40 | 40 | 40 | 40 | 40 | 25 | 10 |
| Dioxan (Tle) | 100 | 50 | 50 | — | 25 | 200 | 200 |
| Diglyme (Tle) | — | 50 | — | 75 | 50 | — | — |
| Solvens-T. (°C) | 90 | 90 | 90 | 90 | 90 | 90 | 90 |
| Prep.-T. (°C) | 45 | 45 | 30 | 25 | 20 | 30 | 60 |
| Zugabe-Dauer (min) | 30 | 30 | 30 | 30 | 30 | 30 | 30 |
| Nachrührdauer (min) | 5 | 5 | 5 | 5 | — | — | — |
| Prim. N (%)[1] | 0,54 | 0,52 | 0,66 | 0,60 | 0,59 | 0,45 | 0,49 |
| NH-Zahl (mg KOH/g)[2] | 21,4 | 20,7 | 26,4 | 24,1 | 23,7 | 18,0 | 19,7 |
| Gesamt-N (%)[3] | 2,51 | 2,50 | 2,46 | 2,39 | 2,50 | 2,48 | 2,61 |

[1]-[3] wie bei Tabelle 1

Tabelle 3

| Beispiel Nr. | 26 | 27 | 28 | 29 | 30 | 31 | 32 |
|---|---|---|---|---|---|---|---|
| Tle Prepolymer A | 100 | — | — | — | — | — | — |
| Tle Prepolymer B | — | 100 | — | — | — | — | — |
| Tle Prepolymer C | — | — | 100 | — | — | — | — |
| Tle Prepolymer D | — | — | — | 100 | — | — | — |
| Tle Prepolymer E | — | — | — | — | 100 | — | — |
| Tle Prepolymer F | — | — | — | — | — | 100 | — |
| Tle Prepolymer G | — | — | — | — | — | — | 100 |
| Dioxan (Tle) | 300 | 300 | 300 | 300 | 300 | 300 | 300 |
| Wasser | 50 | 50 | 50 | 50 | 50 | 50 | 50 |
| Solvens-T. (°C) | 90 | 90 | 90 | 90 | 90 | 90 | 90 |
| Prep.-T. (°C) | 35 | 35 | 35 | 60 | 35 | 35 | 35 |
| Zugabe-Dauer (min) | 45 | 45 | 45 | 45 | 45 | 45 | 45 |
| Nachrührdauer (min) | 10 | 10 | 10 | 25 | 25 | — | — |
| Prim. N (%)[1] | 0,77 | 1,12 | 0,43 | 0,45 | 0,61 | 0,35 | 1,35 |
| NH-Zahl (mg KOH/g)[2] | 30,8 | 44,8 | 17,3 | 18,0 | 24,4 | 14,0 | 54,0 |
| Gesamt-N (%)[3] | 2,51 | 4,48 | 1,35 | 2,20 | 1,34 | 1,62 | 4,60 |

[1]-[3] s. Tabelle 1

Tabelle 4

| Beispiel Nr. | 33 | 34 | 35 | 36 | 37 | 38 | 39 | 40 |
|---|---|---|---|---|---|---|---|---|
| Tle Prepolymer A | 100 | 100 | 100 | 100 | — | — | — | — |
| Tle Prepolymer D | — | — | — | — | 100 | 100 | 100 | 100 |
| Dioxan (Tle) | 200 | 200 | — | — | 250 | 200 | — | — |
| THF (Tle) | — | — | 50 | 50 | — | 100 | 150 | — |
| Diglyme (Tle) | — | — | 50 | 150 | 50 | — | 150 | 300 |
| Wasser (Tle) | 100 | 50 | 40 | 40 | 50 | 50 | 50 | 50 |
| Solvens-T. (°C) | 75 | 75 | 65 | 50 | 90 | 65 | 50 | 90 |
| Prep.-T. (°C) | 80 | 80 | 80 | 70 | 90 | 90 | 60 | 45 |
| Zugabe-Dauer (min) | 30 | 30 | 30 | 60 | 45 | 60 | 60 | 60 |
| Nachrührdauer (min) | 5 | — | — | — | 10 | — | — | — |
| Prim. N (%)[1] | 0,58 | 0,34 | 0,41 | 0,41 | 0,44 | 0,31 | 0,44 | 0,40 |
| NH-Zahl (mg KOH/g)[2] | 23 | 13,7 | 16,4 | 16,5 | 17,4 | 12,5 | 17,5 | 15,9 |
| Gesamt-N (%)[3] | 2,43 | 2,52 | 2,51 | 2,58 | 2,19 | 2,24 | 2,21 | 2,27 |

[1]-[3] wie bei Tabelle 1

### Tabelle 5

| Beispiel Nr. | 41 | 42 | 43 | 44 | 45 | 46 | 47 | 48 | 49 | 50 |
|---|---|---|---|---|---|---|---|---|---|---|
| Tle Prepolymer A | 100 | 100 | 100 | 100 | 100 | 100 | 100 | 100 | 100 | 100 |
| Wasser (Tle) | 35 | 35 | 50 | 50 | 75 | 25 | 100 | 100 | 50 | 50 |
| 1,4-Dioxan (Tle) | 200 | 100 | — | — | — | — | 150 | 150 | 100 | — |
| 1,4-Dithian (Tle) | 100 | 200 | 300 | 500 | 500 | 500 | 150 | 150 | 200 | 200 |
| Co-Solvens (Tle) | — | — | — | — | — | — | — | — | 100[4] DMF | 100[4] CH$_3$CN |
| Solvens-T. (°C) | 95 | 95 | 95 | 95 | 95 | 95 | 80 | 50 | 80 | 80 |
| Prep.-T. (°C) | 60 | 60 | 60 | 60 | 60 | 60 | 60 | 50 | 30 | 30 |
| Zugabe-Dauer (min) | 10 | 10 | 10 | 10 | 10 | 10 | 5 | 5 | 5 | 10 |
| Nachrührdauer (min) | 5 | 5 | 5 | 5 | 5 | 5 | 5 | 5 | — | — |
| Prim. N (%)[1] | 0,57 | 0,60 | 0,59 | 0,58 | 0,57 | 0,66 | 0,55 | 0,46 | 0,65 | 0,60 |
| NH-Zahl (mg KOH/g)[2] | 22,9 | 24,1 | 23,7 | 23,1 | 22,9 | 26,4 | 22,0 | 18,4 | 26,1 | 24,1 |
| Gesamt-N (%)[3] | 2,48 | 2,53 | 2,48 | 2,51 | 2,61 | 2,54 | 2,57 | 2,41 | 2,38 | 2,50 |

[1]-[3] wie bei Tabelle 1
[4] dem NCO-Prepolymer beigegeben

### Tabelle 6

| Beispiel Nr. | 51 | 52 | 53 | 54 | 55 |
|---|---|---|---|---|---|
| Tle Prepolymer A | 100 | — | — | — | — |
| Tle Prepolymer B | — | 100 | — | — | — |
| Tle Prepolymer C | — | — | 100 | — | — |
| Tle Prepolymer D | — | — | — | 100 | — |
| Tle Prepolymer E | — | — | — | — | 100 |
| Wasser (Tle) | 30 | 30 | 30 | 30 | 30 |
| Dioxan (Tle) | 150 | 150 | 150 | 150 | 150 |
| Diglyme (Tle) | 150 | 150 | 150 | 150 | 150 |
| Zugabedauer (min) | 40 | 40 | 40 | 40 | 40 |
| Prim. N (%)[1] | 0,48 | 1,0 | 0,46 | 0,48 | 0,65 |
| NH-Zahl (mg KOH/g)[2] | 19,0 | 40,1 | 18,2 | 19,3 | 26,0 |
| Gesamt-N (%)[3] | 2,56 | 4,48 | 1,31 | 2,30 | 1,37 |

[1]-[3] wie bei Tabelle 1

## Patentansprüche

1. Verfahren zur Herstellung von aromatische Aminogruppen und bevorzugt auch Urethangruppen und/oder gegebenenfalls weitere Gruppen der Isocyanatchemie aufweisenden Verbindungen durch Hydrolyse von mindestens zwei aromatisch gebundene NCO-Gruppen sowie bevorzugt auch Urethangruppen und/oder gebebenenfalls weitere Gruppen der Isocyanatchemie aufweisenden Verbindungen mit einem NCO-Gehalt von 0,5 bis 40 Gew.-%, dadurch gekennzeichnet, dass die NCO-Gruppen aufweisenden Verbindungen mit

A) einer der Menge an NCO-Gruppen mindestens äquivalenten Menge Wasser, und

B) einem Lösungsmittel oder Lösungsmittelgemisch, enthaltend

a) 50 bis 100 Gew.-% ausschliesslich cyclische und/oder acyclische Ether- und/oder Thioetherbindungen enthaltende Lösungsmittel sowie gegebenenfalls

b) unter 50 Gew.-% zumindest teilweise wasserlösliche andere Lösungsmittel;

ohne Mitverwendung saurer oder basischer Katalysatoren, bei −20 bis + 185° C vermischt und das Amin gegebenenfalls nach Abdestillieren der vorhandenen Lösungsmittel und des Wassers isoliert oder das Polyamin durch Phasentrennung, Filtration oder Extraktion mit wasserunlöslichen Lösungsmitteln aus dem Hydrolysenansatz gewinnt.

2. Verfahren nach Anspruch 1, dadurch gekennzeichnet, dass Wasser in mindestens der 10fach stöchiometrischen Menge mitverwendet wird.

3. Verfahren nach den Ansprüchen 1 und 2, dadurch gekennzeichnet, dass als Lösungsmitel Ba) eine Ethylenglykol-, Diethylenglykol-, Triethylenglykoldialkyletherverbindung, eine Tetrahydrofuran- und/oder 1,4-Dioxanverbindung verwendet wird.

4. Verfahren nach den Ansprüchen 1 bis 3, dadurch gekennzeichnet, dass als Lösungsmittel Ba) die Dimethylether von Ethylen-, Diethylen- und Triethylenglykol sowie Tetrahydrofuran und/oder 1,4-Dioxan verwendet werden.

5. Verfahren nach den Ansprüchen 1 bis 4, dadurch gekennzeichnet, dass als gegebenenfalls nur teilweise wassermischbare Lösungsmittel Bb) ein oder mehrere Lösungsmittel aus der Reihe der Carbonsäure-N,N-dialkylamide, Lactame, Tetraalkylharnstoffe, Sulfone, Sulfoxide, Phosphorsäure-N,N-dialkylamide, Nitrile oder Ketone verwendet werden, die unter 250° C sieden.

6. Verfahren nach den Ansprüchen 1 bis 5, dadurch gekennzeichnet, dass man die Hydrolyse bei 50 bis 165° C durchführt.

7. Verfahren nach den Ansprüchen 1 bis 6, dadurch gekennzeichnet, dass man als NCO-Gruppen aufweisende Verbindungen NCO-Prepolymere mit einem Gehalt von 1,5 bis 15 Gew.-% aromatisch gebundenen NCO-Gruppen auf Basis von höhermolekularen, di- bis trifunktionellen Polyether/, Polyester/, Polycarbonat/ und Polycaprolacton/ Polyolen einsetzt.

8. Verfahren nach den Ansprüchen 1 bis 7, dadurch gekennzeichnet, dass die aromatisch gebundenen NCO-Gruppen an den aromatischen Ring einer Phenylen- oder einer Diphenylmethanstruktur (die gegebenenfalls jeweils mit einem oder mehreren $C_1$-$C_4$-Alkylsubstituenten versehen sein können) gebunden sind.

## Claims

1. Process for the production of compounds containing aromatic amino groups and preferably also urethane groups and/or optionally other groups common in isocyanate chemistry by the hydrolysis of compounds which contain at least two aromatically bound NCO groups and preferably also urethane groups and/or optionally other groups common in isocyanate chemistry and which have an NCO content of 0.5 to 40% by weight, characterized in that the compounds containing NCO groups are mixed with

(A) an amount of water at least equivalent to the amount of NCO groups and

(B) a solvent or solvent mixture containing

(a) 50 to 100% by weight of solvents containing only cyclic and/or acyclic ether and/or thioether bonds and, optionally,

(b) less than 50% by weight of other, at least partially water-soluble, solvents

at −20 to +185° C, without the use of acidic or basic catalysts, and the amine is isolated, optionally after distilling off the solvent present and the water, or the polyamine is recovered from the hydrolysis mixture by phase separation, filtration or extraction with water-insoluble solvents.

2. Process according to Claim 1, characterized in that water is used in at least 10 times the stoichiometric amount.

3. Process according to Claims 1 and 2, characterized in that an ethylene glycol, diethylene glycol or triethylene glycol dialkyl ether compound, a tetrahydrofuran compound and/or a 1,4-dioxane compound is used as the solvent (*Ba*).

4. Process according to Claims 1 to 3, characterized in that the dimethyl ethers of ethylene glycol, diethylene glycol and triethylene glycol, and tetrahydrofuran and/or 1,4-dioxane are used as the solvent (*Ba*).

5. Process according to Claims 1 to 4, characterized in that one or more solvents from the series comprising carboxylic acid N,N-dialkylamides, lactames, tetraalkylureas, sulphones, sulphoxides, phosphoric acid N,N-dialkylamides, nitriles or ketones which boil at below 250° C are used as the optionally only partially water-miscible solvents (*Bb*).

6. Process according to Claims 1 to 5, characterized in that the hydrolysis is carried out at 50 to 165° C.

7. Process according to Claims 1 to 6, characterized in that NCO prepolymers having a content of 1.5 to 15% by weight of aromatically bound NCO groups and based on higher molecular, di- to trifunctional polyether, polyester, polycarbonate and polycaprolactone polyols are used as the compounds containing NCO groups.

8. Process according to Claims 1 to 7, characterized in that the aromatically bound NCO groups are attached to the aromatic ring of a phenylene or diphenylmethane structure (each of which can optionally be provided with one or more $C_1$-$C_4$-alkyl substituents).

## Revendications

1. Procédé de préparation de composés contenant des groupes amino aromatiques et de préférence également des groupes uréthanne et/ou le cas échéant d'autres groupes de la chimie des isocyanates par hydrolyse des composés portant au moins deux groupes NCO à liaison aromatiques et de préférence également des groupes uréthanne et/ou le cas échéant d'autres groupes de la chimie des isocyanates, qui contiennent de 0,5 à 40% en poids de NCO, caractérisé en ce que l'on mélange les composés portant les groupes NCO avec:

A) une quantité d'eau au moins équivalente à la quantité des groupes NCO, et

B) un solvant ou mélange solvant contenant:

a) 50 à 100% en poids de solvants exclusivement cycliques et/ou acycliques contenant des liaisons éthers et/ou thioéthers et, le cas échéant,

b) moins de 50% en poids d'autres solvants solubles en partie au moins dans l'eau;
sans utilisation conjointe de catalyseurs acides ou basiques, à une température de −20 à 185° C, et on isole l'amine éventuellement après distillation du solvant présent et de l'eau ou on isole la polyamine à partir du mélange d'hydrolyse par séparation de phases, filtration ou extraction à l'aide de solvants insolubles dans l'eau.

2. Procédé selon la revendication 1, caractérisé en ce que l'on utilise l'eau en une quantité représentant au moins dix fois la quantité théorique.

3. Procédé selon les revendications 1 et 2, caractérisé en ce que l'on utilise en tant que solvant Ba un éther dialkylique de l'éthylèneglycol, du diéthylèneglycol, du triéthylèneglycol, le tétrahydrofuranne et/ou le 1,4-dioxanne.

4. Procédé selon les revendications 1 à 3, caractérisé en ce que l'on utilise en tant que solvant Ba l'éther diméthylique de l'éthylène-, du diéthylène- ou du triéthylèneglycol, ou le tétrahydrofuranne et/ou le 1,4-dioxanne.

5. Procédé selon les revendications 1 à 4, caractérisé en ce que l'on utilise en tant que solvants Bb éventuellement miscibles en partie seulement avec l'eau un ou plusieurs solvants de la classe des car- boxy-N,N-dialkylamides, des lactames, des tétraalkylurées, des sulfones, des sulfoxydes, des N,N-dialkylamides phosphoriques, des nitriles ou des cétones, bouillant au-dessous de 250° C.

6. Procédé selon les revendications 1 à 5, caractérisé en ce que l'hydrolyse est effectuée à une température de 50 à 165° C.

7. Procédé selon les revendications 1 à 6, caractérisé en ce que l'on utilise en tant que composés portant des groupes NCO des prépolymères à groupes NCO contenant de 1,5 à 15% en poids de groupes NCO à liaison aromatiques, à base de polyéther/, polyester/, polycarbonate/ et polycaprolactone/polyols di- ou trifonctionnels à haut poids moléculaire.

8. Procédé selon les revendications 1 à 7, caractérisé en ce que les groupes NCO à liaisons aromatiques sont fixés sur le noyau aromatique d'une structure de phénylène ou de diphénylméthane (qui peut le cas échéant porter un ou plusieurs substituants alkyle en $C_1$-$C_4$).